# DEMANDE DE BREVET EUROPEEN

(11) **EP 3 739 717 A1**
(43) Date de publication de la demande: **18.11.2020**
(21) Numéro de dépôt: 19315034.9
(22) Date de dépôt: 14.05.2019
(51) Int. Cl.: H02J 7/00, H02J 50/10, H02J 7/02

(54) **INSTALLATION ÉLECTRIQUE DE DISTRIBUTION ET DE CHARGE D'AU MOINS UNE PREMIÈRE BATTERIE ET UNE DEUXIÈME BATTERIE ET D'ALIMENTATION D'AU MOINS UN APPAREIL ÉLECTRIQUE ET PROCÉDÉ D'UTILISATION ASSOCIÉ**

(71) Demandeur: HAGER-ELECTRO SAS, 67210 Obernai (FR)
(72) Inventeur: Meyer, Loïc, 67114 Eschau (FR); Spoenemann, Daniel, 67000 Strasbourg (FR); Schmidt, Michael, 67657 Kaiserslautern (DE); Schnurr, Richard, 66957 Vinningen (DE)
(74) Mandataire: Cabinet Nuss

(57) **Abrégé**

L'invention concerne une installation électrique de distribution et de charge d'une première batterie (1) et une deuxième batterie (2) et d'alimentation d'un appareil électrique qui comprend :
- une première batterie (1) et une deuxième batterie (2),
- un dispositif électrique de charge et de distribution (7) desdites première et deuxième batteries (1, 2) comprenant:
- des moyens de raccordement électrique à une source d'énergie électrique extérieure,
- des première et deuxième zones de réception (12, 13) aptes et destinées à recevoir de manière amovible chacune desdites première et deuxième batteries (1, 2),

- une station d'alimentation électrique mobile (15) d'un appareil électrique comprenant :
- une unique zone de réception (16) apte et destinée à recevoir de manière amovible une seule desdites première et deuxième batteries (1, 2).

## Description

La présente invention concerne le domaine des installations électriques de distribution et de charge d'au moins deux batteries et d'alimentation d'au moins un appareil électrique. La présente invention concerne également le domaine des procédés d'utilisation d'une installation électrique de distribution et de charge d'au moins deux batteries et d'alimentation d'au moins un appareil électrique.

Les appareils électriques dits mobiles, tels que des ordinateurs portables ou des téléphones portables, smartphones, tablettes, liseuses sont de plus en plus répandus et employés aussi bien dans le domaine professionnel, que dans le domaine des loisirs. Ce type d'appareils électriques est la plupart du temps alimenté par une batterie interne rechargeable dédiée, qu'il est nécessaire de recharger lorsque celle-ci est déchargée. Pour recharger la batterie interne de l'appareil électrique, l'utilisateur doit brancher l'appareil électrique sur une autre source d'énergie électrique qui la plupart du temps se trouve être le réseau électrique. Dans ce cas, le raccordement au réseau électrique se fait via un transformateur électrique couramment appelé chargeur qui permet de convertir le courant alternatif provenant du réseau électrique en courant continu. Il est ainsi nécessaire de relier le transformateur électrique à la prise de raccordement au réseau électrique, d'une part, et à la prise d'alimentation de l'appareil électrique, d'autre part. Pendant la recharge de la batterie interne de l'appareil électrique, celui-ci ne peut plus être aisément déplacé du fait de sa connexion à la prise de raccordement au réseau électrique. De plus, il est nécessaire que le lieu dans lequel se trouve l'utilisateur de l'appareil électrique dispose d'une ou de plusieurs prises de raccordement au réseau électrique, afin que ce dernier puisse recharger ses appareils électriques. Cela n'est en général pas le cas dans les lieux recevant du public, tels que les gares, les aéroports, les transports en commun, les salles de spectacles, les salles de conférences, les salles de réunion, les bureaux, lieux scolaires, les cafés, les restaurants, les hôtels, les commerces, les centres commerciaux, etc. Il est, dans ces exemples non limitatifs précités, soit impossible, soit difficilement possible, de connecter un ou plusieurs appareils électriques au réseau électrique.

Prenons l'exemple d'une cafétéria, des groupes de personnes, au nombre variable, viennent s'installer pour prendre leur pause, jeter un coup d'oeil sur leurs ordinateurs portables et/ou leurs smartphones et peuvent être amenés à déplacer des tables. Or dans ce lieu convivial, il est impossible de se connecter au réseau électrique du fait de l'absence de prises de raccordement au réseau électrique. De plus, l'utilisation de câbles qui traîneraient par terre n'est pas appropriée, car elle générerait un risque inutile de chute pour toute personne circulant dans cette cafétéria.

Prenons un autre exemple d'une salle pouvant avoir différents usages et qui est amenée à subir souvent des changements. Notamment, une salle dans laquelle le mobilier peut être agencé d'une multitude de façons, au contraire des installations électriques qui ne le peuvent pas. Dans cette situation, il est complexe de recharger une pluralité d'appareils électriques. C'est par exemple le cas d'une salle de réunion, dans laquelle la configuration des tables est variable et le besoin d'alimentation survient très rapidement lors de présentations projetées. Il est alors indispensable de prévoir une source d'énergie pour recharger tous les différents appareils électriques utilisant un transformateur électrique. Par ailleurs, chaque utilisateur doit transporter avec lui ses transformateur et câble d'alimentation ce qui n'est pas commode. Pour tenter de pallier à ces problématiques quelques solutions existent mais elles sont très peu pratiques : il s'agit par exemple de rallonges ou de multiprises, mais elles sont peu esthétiques et représentent un risque de chute pour tous les utilisateurs. Des trappes à câbles peuvent également être prévues, mais elles nécessitent des travaux lors de la construction. Par ailleurs, elles ne sont pas présentes partout dans la salle et il est peu convenable de s'accroupir lors de réunions pour réaliser les branchements nécessaires pour alimenter les appareils électriques.

Plusieurs produits ont été imaginés pour tenter de répondre à ces limitations et sont actuellement sur le marché.

On connaît par exemple la batterie de secours également couramment appelée « powerbank ». La batterie de secours comprend un accumulateur d'énergie électrique qui est capable d'emmagasiner une certaine quantité d'énergie électrique, lorsque celle-ci est banchée à la prise de raccordement au réseau électrique via le transformateur électrique décrit précédemment. Une fois chargée, la batterie de secours devient mobile et transportable et peut recharger la batterie interne d'un appareil électrique mobile de type smartphone. Pour ce faire, il suffit de brancher directement le câble d'alimentation de la batterie de secours dans la prise d'alimentation de l'appareil électrique. La batterie de secours alimente alors directement l'appareil électrique en courant continu. La batterie de secours est facile à transporter et permet ainsi de prolonger la durée de vie de la batterie interne de l'appareil électrique. Il est ainsi aisé de recharger l'appareil électrique quel que soit l'endroit. Elle n'est toutefois pas adaptée à la recharge d'un appareil électrique de type ordinateur portable. La batterie de secours appartient le plus souvent à la personne en possession de l'appareil électrique. La personne doit donc transporter la batterie de secours lors de tous ses déplacements.

On connaît également des bornes de recharge pour batterie interne rechargeable d'appareils électriques du type smartphone, téléphone portable, tablette, liseuse, cigarettes électronique. Elles sont par exemple exploitées sous la dénomination CHARLI CHARGER (nom déposé) et exploitée par la société SMART MOBILE SOLUTIONS. De telles bornes de recharge comprennent leur propre batterie interne rechargeable dédiée qui n'est pas amovible et qui doit être préalablement directement rechargée sur le réseau électrique. La capacité de la batterie interne permet ensuite de restituer de l'énergie électrique de plusieurs appareils électriques du type smartphone. Ensuite pour recharger la batterie interne rechargeable de l'appareil électrique, il suffit de brancher le câble d'alimentation de la borne de recharge dans la prise d'alimentation de l'appareil électrique. De telles bornes de recharge présentent l'avantage d'être mobiles, mais aussi les inconvénients d'être volumineuses et lourdes. Elles sont la plupart du temps mises à disposition dans le lieu accueillant du public. Le responsable d'un ensemble de bornes du lieu accueillant du public doit gérer, chercher, déplacer, et recharger toutes les bornes, ce qui est fastidieux. Lorsque la batterie de la borne est déchargée, il faut déplacer la borne de recharge pour la disposer à proximité de et la brancher à une prise de raccordement au réseau électrique via un adaptateur de charge additionnel. Il faut donc débrancher l'appareil électrique qui était en cours de charge. Ainsi, la recharge de la batterie de borne de recharge nécessite l'immobilisation de cette dernière. La continuité de service ne peut donc pas être assurée. En outre, ces bornes de recharge ne sont pas adaptées à la recharge d'un appareil électrique de type ordinateur portable.

Par ailleurs, ni la batterie de secours précitée, ni la borne de recharge précitée, ne permettent de recharger la batterie interne d'un appareil électrique à charge inductive.

La présente invention a pour but de pallier ces inconvénients en proposant une installation et un procédé d'utilisation de ladite installation qui visent notamment à éviter lors de la charge de l'appareil électrique l'utilisation de raccordement filaire direct au réseau électrique, à garantir la continuité de service indépendamment de l'état du réseau électrique, à permettre à l'utilisateur de l'appareil électrique et de l'installation d'alimenter l'appareil électrique quel que soit le lieu.

L'invention concerne une installation selon la revendication 1.

L'invention concerne un procédé d'utilisation de ladite installation selon la revendication 13.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente en perspective un dispositif électrique de charge et de distribution et une première batterie non insérée.
[Fig. 2] la figure 2 représente en perspective une station d'alimentation électrique mobile et la première batterie non insérée.
[Fig. 3] la figure 3 représente en perspective une installation selon l'invention comprenant le dispositif électrique de charge et de distribution de la figure 1 et la station d'alimentation électrique mobile de la figure 2.
[Fig. 4] la figure 4 représente un schéma fonctionnel des première ou deuxième batteries.
[Fig. 5] la figure 5 représente un schéma fonctionnel du dispositif électrique de charge et de distribution.
[Fig. 6] la figure 6 représente un schéma fonctionnel de la station d'alimentation électrique mobile.

Dans la présente demande, il est fait état d'une installation électrique de distribution et de charge d'au moins une première batterie 1 et une deuxième batterie 2 et d'alimentation d'au moins un appareil électrique 3.

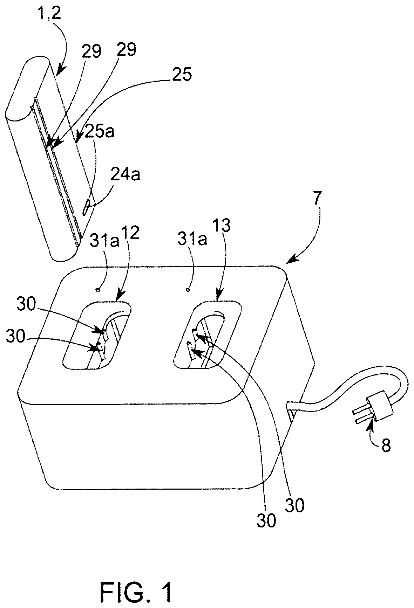

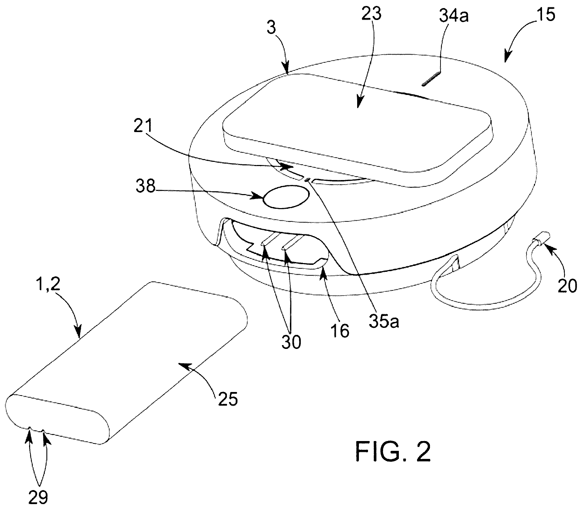

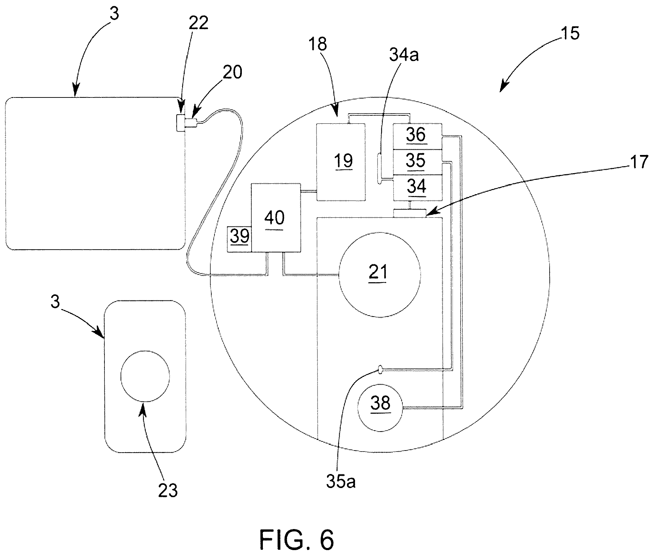

Conformément à l'invention et en référence aux figures, ladite installation électrique est caractérisée en ce qu'elle comprend :
- au moins une première batterie 1 et une deuxième batterie 2 (figures 1 à 4), chacune des première et deuxième batteries 1, 2 comprenant au moins :
   - des moyens d'accumulation d'énergie électrique 4,
   - un contrôleur de charge et de décharge 5 relié électriquement en aval desdits moyens d'accumulation d'énergie électrique 4,
   - un premier connecteur électrique bidirectionnel 6 relié électriquement en aval dudit contrôleur de charge et de décharge 5;
- au moins un dispositif électrique de charge et de distribution 7 (figures 1, 3, 4 et 5) desdites au moins première et deuxième batteries 1, 2 comprenant au moins :
   - des moyens de raccordement électrique 8 à une source d'énergie électrique extérieure 9,
   - un premier circuit électrique 10 relié électriquement en aval des moyens de raccordement électrique comprenant au moins un contrôleur de fin de charge 11,
   - des première et deuxième zones de réception 12, 13 aptes et destinées à recevoir de manière amovible chacune desdites première et deuxième batteries 1, 2, chacune des première et deuxième zones de réception 12, 13 comprenant un deuxième connecteur électrique 14 relié électriquement en aval du premier circuit électrique 10 et apte et destiné à se connecter électriquement audit premier connecteur électrique bidirectionnel 6 complémentaire que comprend ladite batterie 1, 2 pour charger ladite batterie 1, 2 dans un état chargé,
- au moins une station d'alimentation électrique mobile 15 (figures 2, 3 et 6) d'au moins un appareil électrique 3 (figures 2 et 6) comprenant :
   - une unique zone de réception 16 apte et destinée à recevoir de manière amovible une seule desdites première et deuxième batteries 1, 2, l'unique zone de réception 16 comprenant un troisième connecteur électrique 17 apte et destiné à se connecter électriquement au premier connecteur électrique bidirectionnel 6 complémentaire que comprend ladite batterie 1, 2,
   - au moins un deuxième circuit électrique 18 relié électriquement en aval du troisième connecteur électrique 17 et prévu pour être uniquement alimenté par une desdites première et deuxième batteries 1, 2 et comprenant au moins un convertisseur de tension 19,
   - au moins un premier connecteur électrique d'alimentation 20 et/ou un premier organe de transmission d'électricité sans fil 21 du type induction reliés électriquement en aval du deuxième circuit électrique 18 et agencés pour être reliés électriquement à un deuxième connecteur électrique d'alimentation 22 complémentaire et/ou un deuxième organe de transmission d'électricité sans fil 23 du type induction que comprend ledit au moins un appareil électrique 3 agencés pour au moins alimenter électriquement ledit au moins un appareil électrique 3 à partir de l'énergie électrique de la batterie 1, 2, lesdits premier et deuxième connecteurs électriques d'alimentation 20, 22 étant choisis parmi un bus universel série standard ou un connecteur à courant continu standard ;
   le premier connecteur électrique bidirectionnel 6 de chacune desdites première et deuxième batteries 1, 2 étant prévu pour autoriser la connexion électrique uniquement, d'une part, avec un desdits deuxièmes connecteurs électriques 14 dudit dispositif électrique de charge et de distribution 7 pour charger la batterie 1, 2 et d'autre part avec le troisième connecteur électrique 17 de la station d'alimentation électrique mobile 15 pour décharger la batterie 1, 2.

L'installation selon l'invention permet de recharger au moins un appareil électrique 3 sans avoir à raccorder l'appareil électrique 3 à une prise de raccordement à la source d'énergie électrique extérieure 9, telle que le réseau électrique. De plus, cette installation est aisée à déployer dans n'importe quel type d'infrastructure de bâtiment 41 (figure 6), puisqu'il suffit de disposer d'une seule prise de raccordement à la source d'énergie électrique extérieure 9 pour installer et raccorder ledit au moins un dispositif électrique de charge et de distribution 7 à l'aide des moyens de raccordement électrique 8. Avantageusement, ce dispositif électrique de charge et de distribution 7 permet ainsi de recharger au moins une première batterie 1, d'un ensemble de batteries, d'un état déchargé vers un état chargé, lequel ensemble comprend au moins la première batterie 1 et la deuxième batterie 2. En outre, le dispositif électrique de charge et de distribution 7 permet de distribuer cet ensemble de batteries 1, 2 dans un état chargé, celles-ci étant amovibles dudit dispositif électrique de charge et de distribution 7. Une ou plusieurs batteries 1,2 dans un état chargé peuvent ainsi être mises à disposition d'un ou de plusieurs utilisateurs. Bien entendu selon le type d'infrastructure, il peut être préférable de disposer de plusieurs dispositifs électriques de charge et de distribution 7, par exemple pour un immeuble à étages, un dispositif électrique de charge et de distribution 7 par étage. Préférentiellement, la charge de l'ensemble de batteries 1, 2 se fait à un endroit fixe. Une ou plusieurs stations d'alimentation électrique mobiles 15 peuvent être distribuées dans le bâtiment 41 pour alimenter au moins un appareil électrique 3. Avantageusement, ces stations d'alimentation électrique mobiles 15 sont mobiles et transportables et ne doivent pas et ne sont pas agencées pour être reliées à la source d'énergie électrique extérieure 9, telle que le réseau électrique. Elles peuvent être ainsi librement disposées et déplacées à n'importe quel endroit du bâtiment 41. Comme elles ne disposent pas d'une batterie interne dédiée devant être rechargée et raccordée au réseau électrique, comme c'est le cas dans l'art antérieur, elles sont également légères et donc aisément transportables, lorsqu'aucune des première et deuxième batteries 1, 2 n'est insérée dans l'unique zone de réception 16. Il en résulte que les stations d'alimentation électrique mobiles 15 peuvent donc facilement circuler entre plusieurs endroits du bâtiment 41. Par ailleurs, aucun câble ne traîne par terre et ne gêne la circulation. Après mise à disposition, la première batterie 1 dans un état chargé peut être insérée dans l'unique zone de réception 16 de la station d'alimentation électrique mobile 15. Dans cette configuration, la station d'alimentation électrique mobile 15 recevant la première batterie 1 dans l'état chargé peut alimenter au moins un appareil électrique 3. Une fois que la première batterie 1 est dans un état déchargé, il n'est pas nécessaire de déplacer la station d'alimentation électrique mobile 15 en la raccordant à une prise de raccordement au réseau électrique, il suffit de retirer la première batterie 1 de l'unique zone de réception 16 et de la remplacer par la deuxième batterie 2 dans état chargé. Il n'est pas nécessaire non plus de débrancher le ou les appareils électriques 3 de la station d'alimentation électrique mobile 15. La première batterie 1 dans l'état déchargé peut être replacée ultérieurement dans le dispositif de charge et de distribution 7 pour effectuer un nouveau cycle de charge de la première batterie 1.

L'appareil électrique 3 est de préférence mobile (figures 2 et 6). On entend par appareil électrique 3 dit mobile, un appareil électrique 3 qui dispose de sa propre batterie interne rechargeable (non représentée). Cette batterie interne rechargeable peut être démontable ou non démontable dudit appareil électrique 3. L'appareil électrique 3 peut être un appareil électrique 3 portatif par exemple choisi parmi un ordinateur portable, un téléphone portable, un smartphone, une tablette, une liseuse, une cigarette électronique, un appareil photo, une caméra, une enceinte portable, un GPS ou similaire.

La première/deuxième batterie 1, 2 est amovible, d'une part, du dispositif électrique de charge et de distribution 7 et, d'autre part, de la station d'alimentation électrique mobile 15 (figures 1 à 3). Il en résulte qu'elle peut être soit reliée électriquement au dispositif électrique de charge et de distribution 7 pour être rechargée, soit à la station d'alimentation électrique mobile 15 pour être déchargée et ainsi alimenter ledit au moins un appareil électrique 3. Par ailleurs, comme la première batterie 1 est amovible de la station d'alimentation électrique mobile 15, elle peut aisément être remplacée par une deuxième batterie 2 dans un état chargé, lorsque la première batterie 1 est dans un état déchargé, sans avoir à débrancher ledit au moins un appareil électrique 3 qui serait raccordé à ladite station d'alimentation électrique mobile 15.

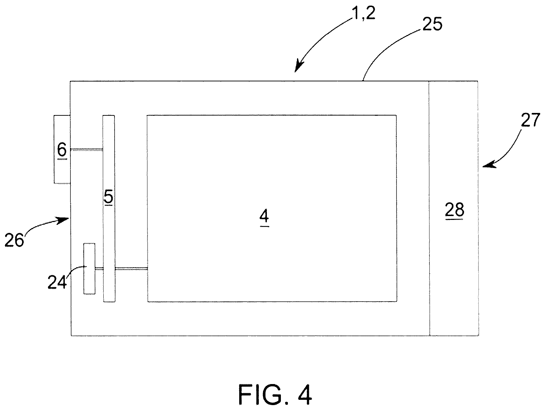

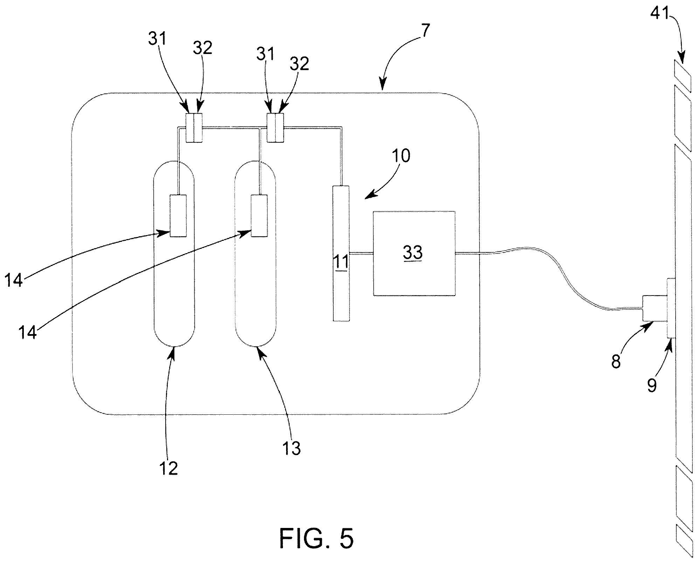

Les moyens d'accumulation d'énergie électrique 4 ont pour fonction de permettre le stockage de l'énergie électrique dans ladite première/deuxième batterie 1, 2 qui provient de la source d'énergie électrique extérieure 9, telle que le réseau électrique (figures 4 et 5). Les moyens d'accumulation d'énergie électrique 4 peuvent consister en un ensemble d'accumulateurs électriques ou cellules. De préférence, les moyens d'accumulation d'énergie électrique 4 sont agencés pour délivrer une énergie inférieure et proche de 100 Watts heures, par exemple égale à 99, 4 Watts heures pour une tension comprise entre 7 et 30 Volts, préférentiellement égale à 14,4 Volts. De préférence, on choisira une première/deuxième batterie 1, 2 agencée pour délivrer une énergie inférieure à 100 Watts heures, car dans ce cas la première/deuxième batterie 1, 2 est facile à déplacer et il n'est pas nécessaire de disposer d'un permis de transport.

Le contrôleur de charge et de décharge 5, couramment appelé BMS, acronyme de « Battery Management System » permet le contrôle des différents paramètres de ladite première/deuxième batterie 1, 2 et permet la charge/décharge des moyens d'accumulation d'énergie électrique 4 de ladite première/deuxième batterie 1, 2 (figure 4). Il en résulte que le contrôleur de charge et de décharge 5 permet de prolonger la durée de vie de ladite première/deuxième batterie 1, 2 en optimisant ses conditions de charge et de décharge. Le contrôleur de charge et de décharge 5 est également configuré pour déterminer si ladite première/deuxième batterie 1, 2 présente un défaut.

Le contrôleur de charge et de décharge 5 se matérialise par un circuit électronique tel que connu dans l'état de l'art.

Le premier connecteur électrique bidirectionnel 6 permet la circulation du courant électrique dans le sens de la charge de ladite première/deuxième batterie 1, 2 et dans le sens de la décharge de ladite première/deuxième batterie 1, 2 (figure 4).

Lors de la charge de ladite première/deuxième batterie 1, 2, le premier connecteur électrique bidirectionnel 6 permet la circulation du courant électrique provenant du dispositif électrique de charge et de distribution 7 vers les moyens d'accumulation d'énergie électrique 4. Lors de la décharge de ladite première/deuxième batterie 1, 2, le premier connecteur électrique bidirectionnel 6 permet la circulation du courant électrique provenant des moyens d'accumulation d'énergie électrique 4 vers le deuxième circuit électrique 18 de la station d'alimentation électrique mobile 15.

Le premier connecteur électrique 6 peut comprendre au moins un connecteur à embrochage et débrochage manuel. Ce type de connecteur présente l'avantage de permettre un raccordement électrique rapide, facile et sûr, même pour un utilisateur non averti.

Le dispositif électrique de charge et de distribution 7 permet de recharger en parallèle au moins lesdites première et deuxième batteries 1, 2 ou une seule desdites première et deuxième batteries 1, 2 (figures 1, 3 et 5). Le dispositif électrique de charge et de distribution 7 permet également le stockage et la distribution d'au moins une desdites première et deuxième batteries 1, 2. Le dispositif électrique de charge et de distribution 7 est destiné à être disposé à proximité d'une prise de raccordement (non représentée) à la source d'énergie électrique extérieure 9, par exemple le réseau électrique que comprend le bâtiment 41 (figure 5). Le dispositif électrique de charge et de distribution 7 peut être agencé pour être rangé dans un meuble, afin de ne pas être visible du public.

Les moyens de raccordement électrique 8 permettent le raccordement électrique du dispositif électrique de charge et de distribution 7 à la source d'énergie électrique extérieure 9 (figures 1 et 5). Les moyens de raccordement électrique 8 peuvent consister en une prise électrique de forme complémentaire à la prise de raccordement à la source d'énergie électrique extérieure 9 du bâtiment 41 (figures 1 et 5).

La source d'énergie électrique extérieure 9 s'entend d'une source d'énergie électrique qui est extérieure à celle de ladite première/deuxième batterie 1, 2 et à celle de l'appareil électrique 3. Elle peut par exemple être choisie parmi le réseau électrique ou un générateur autonome d'électricité. Elle peut délivrer du courant continu DC ou du courant alternatif AC. Le réseau électrique peut délivrer une tension comprise entre 220 et 240 Volts à une fréquence comprise entre 50 et 60 Hertz en courant alternatif.

Le contrôleur de fin de charge 11 permet de déterminer si le cycle de charge de ladite première/deuxième batterie 1, 2 est terminé pour ne pas endommager ladite première/deuxième batterie 1, 2 (figure 5).

Les première et deuxième zones de réception 12, 13 permettent chacune de recevoir mécaniquement et de manière amovible au moins en partie ladite première/deuxième batterie 1, 2 (figures 1, 3 et 5). De cette façon, la première/deuxième zone de réception 12, 13 forme un socle de réception de ladite première/deuxième batterie 1, 2. La première/deuxième zone de réception 12, 13 peut consister en un logement de forme complémentaire à au moins une partie de ladite première/deuxième batterie 1, 2. Par exemple si ladite première/deuxième batterie 1, 2 présente une section rectangulaire ou oblongue, la première/deuxième zone de réception 12, 13 peut être un logement de section rectangulaire ou oblongue.

Le deuxième connecteur électrique 14 permet la connexion électrique avec le premier connecteur bidirectionnel 6 de la première/deuxième batterie 1, 2 (figure 5). Le deuxième connecteur électrique 14 permet la circulation du courant électrique au moins dans le sens de la charge de ladite première/deuxième batterie 1, 2. Le deuxième connecteur électrique 14 peut être un connecteur à embrochage et débrochage manuel. Ce type de connecteur présente l'avantage de permettre un raccordement électrique rapide, facile et sûr, même pour un utilisateur non averti et de rendre la première/deuxième batterie 1, 2 amovible du dispositif électrique de charge et de distribution 7.

La station d'alimentation électrique mobile 15 permet l'alimentation autonome d'au moins un appareil électrique 3 sans avoir à le connecter à une source d'énergie électrique extérieure 9, telle que le réseau électrique (figures 2 et 6). Aucune connexion filaire de la station d'alimentation mobile 15 à la source d'énergie électrique extérieure 9 n'est prévue ou nécessaire. La station d'alimentation électrique mobile 15 n'a pas besoin de transformateur électrique AC/DC car la première/deuxième batterie 1, 2 fournit directement du courant continu.

La station d'alimentation électrique mobile 15 est de préférence configurée pour tenir sur un support tel qu'une table et occuper un espace sur le support qui soit de l'ordre de quelques centaines de centimètres carrés. La station d'alimentation électrique mobile 15 peut par exemple avoir une forme de disque de quelques dizaines de centimètres de diamètre, préférentiellement compris entre 15 et 25 centimètres de diamètre.

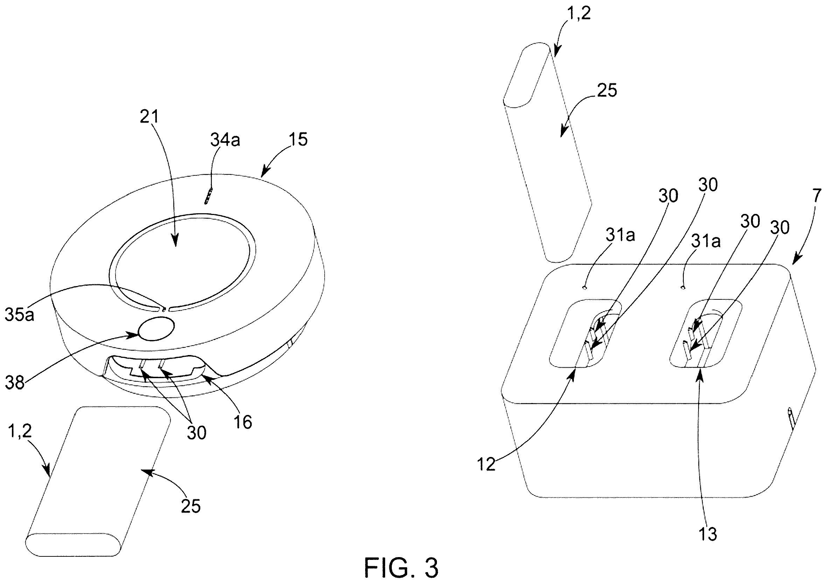

L'unique zone de réception 16 permet de recevoir mécaniquement et de manière amovible au moins en partie ladite première/deuxième batterie 1, 2 (figures 2 et 3). De cette façon, l'unique zone de réception 16 forme un socle de réception de ladite première/deuxième batterie 1, 2. L'unique zone de réception 16 peut consister en un logement de forme complémentaire à au moins une partie de ladite première/deuxième batterie 1, 2 à au moins une partie de ladite première/deuxième batterie 1, 2. Par exemple si ladite première/deuxième batterie 1, 2 présente une section rectangulaire ou oblongue, l'unique zone de réception 16 peut être un logement de section rectangulaire ou oblongue.

Le troisième connecteur électrique 17 permet la connexion électrique avec le premier connecteur bidirectionnel 6 de la première/deuxième batterie 1, 2. Le troisième connecteur électrique 17 permet la circulation du courant électrique au moins dans le sens de la décharge de ladite première/deuxième batterie 1, 2 (figure 6). Le troisième connecteur électrique 17 peut être un connecteur à embrochage et débrochage manuel. Ce type de connecteur présente l'avantage de permettre un raccordement électrique rapide, facile et sûr, même pour un utilisateur non averti, et de rendre la première/deuxième batterie 1, 2 amovible de la station d'alimentation électrique mobile 15.

Le convertisseur de tension 19 permet de multiplier la tension provenant de ladite première/deuxième batterie 1, 2 (figure 6). Par exemple, pour ladite première/deuxième batterie 1, 2 délivrant 14,4 Volts, à la sortie du convertisseur de tension 19, la tension mesurée est supérieure ou égale à 20 Volts.

Le premier connecteur électrique d'alimentation 20 permet la connexion électrique filaire et mécanique avec le deuxième connecteur électrique 22 de l'appareil électrique 3 (figures 2 et 6).

Le premier organe de transmission d'électricité sans fil 21 permet la transmission d'électricité par induction avec le deuxième organe de transmission d'électricité sans fil 23 de l'appareil électrique 3 (figures 2 et 6).

Le premier connecteur électrique d'alimentation 20 et le deuxième connecteur électrique 22 de type un bus universel série standard permettent un échange d'électricité de la première/deuxième batterie 1, 2 vers l'appareil électrique 3 et optionnellement des échanges de données bidirectionnels entre la station d'alimentation électrique mobile 15 et l'appareil électrique 3.

Préférentiellement, le premier connecteur électrique d'alimentation 20 de type un bus universel série standard est mâle et le deuxième connecteur électrique d'alimentation 22 de type un bus universel série standard est femelle.

De préférence, le premier connecteur électrique d'alimentation 20 et le deuxième connecteur électrique 22 sous la forme d'un bus universel série standard sont respectivement de type A, de type B, ou de type C.

Lorsque le premier connecteur électrique d'alimentation 20 et le deuxième connecteur électrique 22 sont des connecteurs à courant continu standard, ils permettent uniquement la circulation du courant électrique de la première/deuxième batterie 1, 2 vers l'appareil électrique 3.

Préférentiellement, la première batterie 1 et/ou la deuxième batterie 2 peuvent comprendre un module de mesure et signalisation du niveau de charge 24 d'une desdites première et deuxième batteries 1, 2 (figure 4). Dans ce cas, ledit module de mesure et signalisation du niveau de charge 24 est relié électriquement en aval des moyens d'accumulation électrique 4 et est configuré pour mesurer la tension en sortie des moyens d'accumulation électrique 4 et pour émettre un signal d'indication du niveau de charge fonction de la tension en sortie des moyens d'accumulation électrique 4.

Le module de mesure et de signalisation du niveau de charge 24 de la première batterie 1 et/ou la deuxième batterie 2 permet de mesurer la tension en sortie des moyens d'accumulation électrique 4 et d'émettre un signal d'indication du niveau de charge qui est corrélé à la mesure de la tension en sortie des moyens d'accumulation électrique 4. Pour ce faire, le module de mesure et de signalisation du niveau de charge 24 peut comprendre un organe de mesure de ladite tension (non représenté) et un organe de signalisation. Le signal d'indication est de préférence un signal visuel. Cet exemple n'est pas limitatif. Dans ce cas, l'organe de signalisation peut comprendre au moins un indicateur lumineux 24a, tel qu'une LED (figure 1). Par exemple, la luminosité de l'indicateur lumineux 24a peut varier en fonction de la tension mesurée par l'organe de mesure de la tension. Il en résulte que l'utilisateur de la première/deuxième batterie 1, 2 peut être averti du niveau de charge de la première/deuxième batterie 1, 2.

Préférentiellement, la première batterie 1 et/ou la deuxième batterie 2 peuvent comprendre une enveloppe 25 (figures 1 à 4), comprenant une première interface 26 destinée à être reçue par coulissement dans la première zone de réception 12 ou la deuxième zone de réception 13 du dispositif électrique de charge et de distribution 7 ou l'unique zone de réception 16 de la station d'alimentation électrique mobile 15 et une deuxième interface 27 comprenant un organe de préhension 28 de la première batterie 1 ou de la deuxième batterie 2 (figure 4).

Cette enveloppe 25 permet de protéger les différents constituants de la première/deuxième batterie 1, 2.

De préférence, l'enveloppe 25 comprend une fenêtre d'accès 25a laissant apparaître ledit au moins indicateur lumineux 24a (figure 1).

Au moins ladite première interface 26 de l'enveloppe 25 peut comprendre des premiers moyens de détrompage 29 (figure 1) coopérant avec des deuxièmes moyens de détrompage 30 (figures 1, 2 et 3) complémentaires que comprend la première zone de réception 12 et la deuxième zone de réception 13 du dispositif électrique de charge et de distribution 7 et l'unique zone de réception 16 de la station d'alimentation électrique mobile 15.

Ces moyens de détrompage 29, 30 permettent d'assurer que la connexion électrique entre le premier connecteur électrique bidirectionnel 6 et le deuxième connecteur électrique 14 dudit dispositif électrique de charge et de distribution 7 se fait dans le sens de circulation du courant électrique correspondant à la charge de la première/deuxième batterie 1, 2.

Ces moyens de détrompage 29, 30 permettent d'assurer que la connexion électrique entre le premier connecteur électrique bidirectionnel 6 et le troisième connecteur électrique 17 de la station d'alimentation électrique mobile 15 se fait dans le sens de circulation du courant électrique correspondant à la décharge de la première/deuxième batterie 1, 2.

De préférence, le dispositif électrique de charge et de distribution 7 peut comprendre un module de mesure et de signalisation du chargement 31 de ladite première batterie 1 et/ou de ladite deuxième batterie 2 (figure 5). Dans ce cas, ledit module de mesure et de signalisation du chargement 31 est relié électriquement en aval du contrôleur de fin de charge 11 et est configuré pour mesurer le courant circulant en sortie du contrôleur de fin de charge 11 et pour émettre un signal d'indication du chargement fonction du courant circulant en sortie du contrôleur de fin de charge 11.

Le module de mesure et de signalisation du chargement 31 du dispositif électrique de charge et de distribution 7 permet de mesurer le courant circulant en sortie du contrôleur de fin de charge 11 et d'émettre un signal d'indication du chargement corrélé à la mesure du courant circulant en sortie du contrôleur de fin de charge 11. Pour ce faire, le module de mesure et de signalisation du chargement 31 peut comprendre un organe de mesure du courant (non représenté) et un organe de signalisation. Le signal d'indication est de préférence un signal visuel. Cet exemple n'est pas limitatif. Dans ce cas, l'organe de signalisation peut comprendre au moins un indicateur lumineux 31a, tel qu'une LED (figures 1 et 3). Par exemple, la couleur de l'indicateur lumineux 31a peut varier en fonction du courant mesuré par l'organe de mesure du courant. Il en résulte que l'utilisateur du dispositif électrique de charge et de distribution 7 peut être averti que la première/deuxième batterie 1, 2 est en train d'être chargée.

Préférentiellement, le dispositif électrique de charge et de distribution 7 peut comprendre un module de signalisation de fin de vie 32 de ladite première batterie 1 et/ou de ladite deuxième batterie 2 (figure 5). Ce module de signalisation de fin de vie 32 est configuré pour communiquer avec le contrôleur de charge et de décharge 5 de la première/deuxième batterie 1, 2 et pour signaler si au moins un des paramètres de la première/deuxième batterie 1, 2 est un défaut.

De préférence, le premier circuit électrique 10 dudit dispositif électrique de charge et de distribution 7 peut comprendre un transformateur électrique AC/DC 33 relié électriquement en amont du contrôleur de fin de charge 11 (figure 5).

Lorsque la source d'énergie électrique extérieure 9 délivre un courant alternatif DC, le transformateur électrique AC/DC 33 permet de transformer le courant alternatif en courant continu pour permettre la charge de la première/deuxième batterie 1, 2.

Préférentiellement, la station d'alimentation électrique mobile 15 peut comprendre en outre un module de mesure et de signalisation du niveau de charge 34 d'une desdites première et deuxième batteries 1, 2 (figure 6). Dans ce cas, ledit module de mesure et de signalisation du niveau de charge 34 est relié électriquement en aval du troisième connecteur électrique 17 et est configuré pour mesurer la tension en sortie du troisième connecteur 17 et pour émettre un signal d'indication du niveau de charge fonction de la tension en sortie du troisième connecteur électrique 17.

Le module de mesure et de signalisation du niveau de charge 34 de la première batterie 1 et/ou la deuxième batterie 2 permet de mesurer la tension en sortie du troisième connecteur 17 de la station d'alimentation électrique mobile 15 et d'émettre un signal d'indication du niveau de charge qui est corrélé à la mesure de la tension en sortie du troisième connecteur 17. Pour ce faire, le module de mesure et de signalisation du niveau de charge 34 peut comprendre un organe de mesure de ladite tension (non représenté) et un organe de signalisation. Le signal d'indication est de préférence un signal visuel. Cet exemple n'est pas limitatif. Dans ce cas, l'organe de signalisation peut comprendre au moins un indicateur lumineux 34a, tel qu'une LED (figures 2, 3 et 6). Par exemple, la luminosité de l'indicateur lumineux 34a peut varier en fonction de la tension mesurée par l'organe de mesure de la tension. Il en résulte que l'utilisateur de la première/deuxième batterie 1, 2 peut être averti du niveau de charge de la première/deuxième batterie 1, 2. L'utilisateur peut ainsi savoir quand changer la première/deuxième batterie 1, 2.

La station d'alimentation électrique mobile 15 peut comprendre en outre un module de mesure et de signalisation de l'alimentation 35 dudit appareil électrique 3 (figure 6). Dans ce cas, ledit module de mesure et de signalisation de l'alimentation 35 est relié électriquement en aval du troisième connecteur électrique 17 et est configuré pour mesurer le courant circulant en sortie du troisième connecteur électrique 17 et pour émettre un signal d'indication du chargement fonction du courant circulant en sortie du troisième connecteur électrique 17.

Le module de mesure et de signalisation de l'alimentation 35 dudit appareil électrique 3 permet de mesurer le courant circulant en sortie du troisième connecteur électrique 17 et d'émettre un signal d'indication du chargement corrélé à la mesure du courant circulant en sortie du contrôleur de fin de charge 11. Pour ce faire, le module de mesure et de signalisation de l'alimentation 35 peut comprendre un organe de mesure du courant (non représenté) et un organe de signalisation. Le signal d'indication est de préférence un signal visuel. Cet exemple n'est pas limitatif. Dans ce cas, l'organe de signalisation peut comprendre au moins un indicateur lumineux 35a, tel qu'une LED (figures 2, 3 et 6). Par exemple, la couleur de l'indicateur lumineux 35a peut varier en fonction du courant mesuré par l'organe de mesure du courant. Il en résulte que l'utilisateur du dispositif électrique de charge et de distribution 7 peut être averti que la première/deuxième batterie 1, 2 est en train d'être déchargée ou autrement dit que ledit au moins un appareil électrique 3 est alimenté par la première/deuxième batterie 1, 2.

De préférence, le deuxième circuit électrique 18 de la station d'alimentation électrique mobile 15 peut comprendre en outre un module de mise en veille 36 relié électriquement en amont dudit convertisseur de tension 19 et en aval du module de mesure et de signalisation de l'alimentation 35 (figure 6). Dans ce cas, la station d'alimentation électrique mobile 15 comprend un organe de contrôle 38 (figures 2, 3 et 6) du module de mise en veille 36 relié électriquement au module de mise en veille 36, lesquels module de mise en veille 36 et organe de contrôle 38 étant configurés pour autoriser l'alimentation électrique du convertisseur de tension 19 uniquement consécutivement à l'actionnement de l'organe de contrôle 38 pendant une durée déterminée ou si un courant est mesuré par le module de mesure et de signalisation de l'alimentation 35, préférentiellement par l'organe de mesure que comprend le module de mesure et de signalisation de l'alimentation 35.

Le module de mise en veille 36 permet d'interrompre l'alimentation de la première/deuxième batterie sous une temporisation de ladite durée déterminée, préférentiellement égale à 20 secondes et si aucun appareil électrique 3 n'est branché à la station d'alimentation électrique mobile 15.

L'organe de contrôle 38 peut être un bouton actionnable en appuyant sur ce dernier (figures 2, 3 et 6).

Préférentiellement, le deuxième circuit électrique 18 de la station d'alimentation électrique mobile 15 peut comprendre en outre un module de communication sans fil 39 configuré pour transmettre des informations relatives à l'état de fonctionnement de ladite station d'alimentation électrique mobile 15 et/ou dudit au moins un appareil électrique 3 (figure 6).

Le module de communication sans fil 39 permet par exemple de communiquer des informations provenant de l'appareil électrique 3 avec un module de communication (non représenté) que comprendrait un écran (non représenté) et/ou des haut-parleurs (non représentés) situés dans le bâtiment 41. Il permet par exemple d'afficher une présentation, une vidéo sur l'écran et/ou de d'émettre des signaux sonores à l'aide du haut-parleur à partir d'un flux vidéo et/ou audio provenant de l'appareil électrique 3.

De préférence, le deuxième circuit électrique 18 de la station d'alimentation électrique mobile 15 peut comprendre en outre un contrôleur de connectique 40 agencé pour contrôler ledit premier connecteur électrique d'alimentation 20 sous forme d'un bus universel série standard (figure 6). Dans ce cas, ledit contrôleur de connectique 40 est relié électriquement en aval du convertisseur de tension 19 et en amont dudit premier connecteur électrique d'alimentation 20.

Le contrôleur de connectique 40 permet de contrôler le premier connecteur électrique d'alimentation 20.

L'invention concerne également un procédé d'utilisation de ladite installation électrique de distribution et de charge d'au moins une première batterie 1 et une deuxième batterie 2 et d'alimentation d'au moins un appareil électrique 3 selon l'invention.

Conformément à l'invention, ledit procédé comprend au moins :
- une étape de raccordement du dispositif électrique de charge et de distribution 7 à la source d'énergie électrique extérieure 9 d'un bâtiment 41, lors de laquelle les moyens de raccordement électrique 8 du dispositif électrique de charge et de distribution 7 sont reliés électriquement à ladite source d'énergie électrique extérieure 9 du bâtiment 41,
- une étape de connexion desdites première et deuxième batteries 1, 2 au dispositif électrique de charge et de distribution 7, lors de laquelle lesdites première et deuxième batteries 1, 2 sont reçues respectivement dans la première zone de réception 12 et la deuxième zone de réception 13, et le premier connecteur électrique bidirectionnel 6 de la première batterie 1 et le deuxième connecteur électrique 14 de la première zone de réception 12 sont reliés électriquement pour charger en énergie électrique ladite première batterie 1 dans un état chargé, et le premier connecteur électrique bidirectionnel 6 de la deuxième batterie 2 et le deuxième connecteur électrique 14 de la deuxième zone de réception 13 sont reliés électriquement pour charger en énergie électrique ladite deuxième batterie 2 dans un état chargé,
- une étape de mise à disposition d'au moins une station d'alimentation électrique mobile 15 d'au moins un appareil électrique 3 dans ledit au moins un bâtiment 41, lors de laquelle ladite au moins une station d'alimentation électrique mobile 15 est mise à disposition,
- une étape de mise à disposition de ladite première batterie 1 en état chargé, lors de laquelle ladite première batterie 1 en état chargé est mise à disposition,
- une étape de connexion de ladite première batterie 1 à la station d'alimentation électrique mobile 15, lors de laquelle la première batterie 1 est reçue dans l'unique zone de réception 16 de la station d'alimentation électrique mobile 15 et le premier connecteur électrique bidirectionnel 6 de la première batterie 1 et le troisième connecteur électrique 17 de la station d'alimentation électrique mobile 15 sont reliés électriquement,
- une étape de raccordement dudit au moins un appareil électrique 3 à la station d'alimentation électrique mobile 15, lors de laquelle le premier connecteur électrique d'alimentation 20 de la station d'alimentation électrique mobile 15 et le deuxième connecteur électrique d'alimentation 22 de l'appareil électrique 3 sont reliés électriquement et/ou le premier organe de transmission d'électricité sans fil 21 de la station d'alimentation électrique mobile 15 et le deuxième organe de transmission d'électricité sans fil 23 de l'appareil électrique 3 sont mis à portée l'un de l'autre, pour alimenter électriquement ledit au moins un appareil électrique 3,
- une étape de déconnexion de ladite première batterie 1 de la station d'alimentation électrique mobile 15, lors de laquelle la première batterie 1 est retirée de l'unique zone de réception 16 de la station d'alimentation électrique mobile 15 et le premier connecteur électrique bidirectionnel 6 de la première batterie 1 et le troisième connecteur électrique 17 de la station d'alimentation électrique mobile 15 sont déconnectés électriquement l'un de l'autre,
- une étape de reconnexion de ladite première batterie 1 au dispositif électrique de charge et de distribution 7, lors de laquelle ladite première batterie 1 en état déchargé est reçue dans la première zone de réception 12, et le premier connecteur électrique bidirectionnel 6 de la première batterie 1 et le deuxième connecteur électrique 14 de la première zone de réception 12 sont reliés électriquement pour recharger en énergie électrique ladite première batterie 1 dans un état chargé,
- une étape de mise à disposition de la deuxième batterie 2 en état chargé, lors de laquelle ladite deuxième batterie 2 en état chargé est mise à disposition.

Lors de l'étape de mise à disposition de ladite première batterie 1 en état chargé, l'utilisateur peut prendre au moins une première batterie 1 auprès du dispositif électrique de charge et de distribution 7 ou un gestionnaire peut prendre au moins une première batterie 1 auprès du dispositif électrique de charge et de distribution 7 et la donner à l'utilisateur.

Lors de l'étape de connexion de ladite première batterie 1 à la station d'alimentation électrique mobile 15, l'utilisateur peut ensuite connecter celle-ci à la station d'alimentation électrique mobile 15 en l'insérant dans l'unique zone de réception 16.

Lors de l'étape de raccordement dudit au moins un appareil électrique 3 à la station d'alimentation électrique mobile 15, l'utilisateur peut brancher le ou les appareils électriques 3 ou poser l'appareil électrique 3 équipé d'une charge inductive sur le premier organe de transmission d'électricité sans fil.

Lors de l'étape de déconnexion de ladite première batterie 1 de la station d'alimentation électrique mobile 15, quand la première batterie 1 est vide, l'utilisateur peut sortir la première batterie 1 de la station d'alimentation électrique mobile 15.

Lors de l'étape de reconnexion de ladite première batterie 1 au dispositif électrique de charge et de distribution 7, l'utilisateur peut replacer la première batterie 1 vide auprès du dispositif électrique de charge et de distribution 7 ou la redonner au gestionnaire qui replace alors la première batterie 1 vide auprès du dispositif électrique de charge et de distribution 7.

Lors de l'étape de mise à disposition de la deuxième batterie 2 en état chargé, l'utilisateur peut prendre une deuxième batterie 2 pleine ou le gestionnaire peut prendre la deuxième batterie 2 pleine et la donner à l'utilisateur.

Le procédé peut comprendre en outre une étape de mise en marche de la station d'alimentation électrique mobile 15, lors de laquelle l'organe de contrôle 38 du module de mise en veille 36 est actionné pour autoriser l'alimentation électrique du convertisseur de tension 19.

Lors de l'étape de mise en marche, l'utilisateur allume la station d'alimentation électrique mobile 15 en actionnant l'organe de contrôle 38.

Après la mise en marche, et lorsqu'un appareil électrique 3 quelconque est en charge, l'indicateur lumineux 35a peut indiquer que la première batterie 1 fournit de l'énergie.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Installation électrique de distribution et de charge d'au moins une première batterie (1) et une deuxième batterie (2) et d'alimentation d'au moins un appareil électrique (3), ladite installation électrique étant **caractérisée en ce qu'**elle comprend :
- au moins une première batterie (1) et une deuxième batterie (2), chacune des première et deuxième batteries (1, 2) comprenant au moins :
- des moyens d'accumulation d'énergie électrique (4),
- un contrôleur de charge et de décharge (5) relié électriquement en aval desdits moyens d'accumulation d'énergie électrique (4),
- un premier connecteur électrique bidirectionnel (6) relié électriquement en aval dudit contrôleur de charge et de décharge (5);
- au moins un dispositif électrique de charge et de distribution (7) desdites au moins première et deuxième batteries (1, 2) comprenant au moins :
- des moyens de raccordement électrique (8) à une source d'énergie électrique extérieure (9),
- un premier circuit électrique (10) relié électriquement en aval des moyens de raccordement électrique comprenant au moins un contrôleur de fin de charge (11),
- des première et deuxième zones de réception (12, 13) aptes et destinées à recevoir de manière amovible chacune desdites première et deuxième batteries (1, 2), chacune des première et deuxième zones de réception (12, 13) comprenant un deuxième connecteur électrique (14) relié électriquement en aval du premier circuit électrique (10) et apte et destiné à se connecter électriquement audit premier connecteur électrique bidirectionnel (6) complémentaire que comprend ladite batterie (1, 2) pour charger ladite batterie (1, 2) dans un état chargé,
- au moins une station d'alimentation électrique mobile (15) d'au moins un appareil électrique (3) comprenant :
- une unique zone de réception (16) apte et destinée à recevoir de manière amovible une seule desdites première et deuxième batteries (1, 2), l'unique zone de réception (16) comprenant un troisième connecteur électrique (17) apte et destiné à se connecter électriquement au premier connecteur électrique bidirectionnel (6) complémentaire que comprend ladite batterie (1, 2),
- au moins un deuxième circuit électrique (18) relié électriquement en aval du troisième connecteur électrique (17) et prévu pour être uniquement alimenté par une desdites première et deuxième batteries (1, 2) et comprenant au moins un convertisseur de tension (19),
- au moins un premier connecteur électrique d'alimentation (20) et/ou un premier organe de transmission d'électricité sans fil (21) du type induction relié électriquement en aval du deuxième circuit électrique (18) et agencé pour être relié électriquement à un deuxième connecteur électrique d'alimentation (22) complémentaire et/ou un deuxième organe de transmission d'électricité sans fil (23) du type induction que comprend ledit au moins un appareil électrique (3) agencés pour au moins alimenter électriquement ledit au moins un appareil électrique (3) à partir de l'énergie électrique de la batterie (1, 2), lesdits premier et deuxième connecteurs électriques d'alimentation (20, 22) étant choisis parmi un bus universel série standard ou un connecteur à courant continu standard ;
le premier connecteur électrique bidirectionnel (6) de chacune desdites première et deuxième batteries (1, 2) étant prévu pour autoriser la connexion électrique uniquement, d'une part, avec un desdits deuxièmes connecteurs électriques (14) dudit dispositif électrique de charge et de distribution (7) pour charger la batterie (1, 2) et d'autre part avec le troisième connecteur électrique (17) de la station d'alimentation électrique mobile (15) pour décharger la batterie (1, 2).

2. Installation selon la revendication 1, **caractérisée en ce que** la première batterie (1) et/ou la deuxième batterie (2) comprennent un module de mesure et signalisation du niveau de charge (24) d'une desdites première et deuxième batteries (1, 2), ledit module de mesure et signalisation du niveau de charge (24) étant relié électriquement en aval des moyens d'accumulation électrique (4) et étant configuré pour mesurer la tension en sortie des moyens d'accumulation électrique (4) et pour émettre un signal d'indication du niveau de charge fonction de la tension en sortie des moyens d'accumulation électrique (4).

3. Installation selon l'une quelconque des revendications 1 à 2, **caractérisée en ce que** la première batterie (1) ou la deuxième batterie (2) comprend une enveloppe (25) comprenant une première interface (26) destinée à être reçue par coulissement dans la première zone de réception (12) ou la deuxième zone de réception (13) du dispositif électrique de charge et de distribution (7) ou l'unique zone de réception (16) de la station d'alimentation électrique mobile (15) et une deuxième interface (27) comprenant un organe de préhension (28) de la première batterie (1) ou de la deuxième batterie (2).

4. Installation selon la revendication 3, **caractérisée en ce que** ladite première interface (26) de l'enveloppe (25) comprend des premiers moyens de détrompage (29) coopérant avec des deuxièmes moyens de détrompage (30) complémentaires que comprend la première zone de réception (12) et la deuxième zone de réception (13) du dispositif électrique de charge et de distribution (7) et l'unique zone de réception (16) de la station d'alimentation électrique mobile (15).

5. Installation selon l'une quelconque des revendications 1 à 4, **caractérisée en ce que** le dispositif électrique de charge et de distribution (7) comprend un module de mesure et de signalisation du chargement (31) de ladite première batterie (1) et/ou de ladite deuxième batterie (2), ledit module de mesure et de signalisation du chargement (31) étant relié électriquement en aval du contrôleur de fin de charge (11) et étant configuré pour mesurer le courant circulant en sortie du contrôleur de fin de charge (11) et pour émettre un signal d'indication du chargement fonction du courant circulant en sortie du contrôleur de fin de charge (11).

6. Installation selon l'une quelconque des revendications 1 à 5, **caractérisée en ce que** le dispositif électrique de charge et de distribution (7) comprend un module de signalisation de fin de vie (32) de ladite première batterie (1) et/ou de ladite deuxième batterie (2), le module de signalisation de fin de vie (32) étant configuré pour communiquer avec le contrôleur de charge et de décharge (5) de la première/deuxième batterie (1, 2) et pour signaler si au moins un des paramètres de la première/deuxième batterie (1, 2) est un défaut

7. Installation selon l'une quelconque des revendications 1 à 6, **caractérisée en ce que** le premier circuit électrique (10) dudit dispositif électrique de charge et de distribution (7) comprend un transformateur électrique AC/DC (33) relié électriquement en amont du contrôleur de fin de charge (11).

8. Installation selon l'une quelconque des revendications 1 à 7, **caractérisée en ce que** la station d'alimentation électrique mobile (15) comprend en outre un module de mesure et de signalisation du niveau de charge (34) d'une desdites première et deuxième batteries (1, 2), ledit module de mesure et de signalisation du niveau de charge (34) étant relié électriquement en aval du troisième connecteur électrique (17) et étant configuré pour mesurer la tension en sortie du troisième connecteur (17) et pour émettre un signal d'indication du niveau de charge fonction de la tension en sortie du troisième connecteur électrique (17).

9. Installation selon l'une quelconque des revendications 1 à 8, **caractérisée en ce que** la station d'alimentation électrique mobile (15) comprend en outre un module de mesure et de signalisation de l'alimentation (35) dudit appareil électrique (3), ledit module de mesure et de signalisation de l'alimentation (35) étant relié électriquement en aval du troisième connecteur électrique (17) et étant configuré pour mesurer le courant circulant en sortie du troisième connecteur électrique (17) et pour émettre un signal d'indication du chargement fonction du courant circulant en sortie du troisième connecteur électrique (17).

10. Installation selon la revendication 9, **caractérisée en ce que** le deuxième circuit électrique (18) de la station d'alimentation électrique mobile (15) comprend en outre un module de mise en veille (36) relié électriquement en amont dudit convertisseur de tension (19) et en aval du module de mesure et de signalisation de l'alimentation (35) et **en ce que** la station d'alimentation électrique mobile (15) comprend un organe de contrôle (38) du module de mise en veille (36) relié électriquement au module de mise en veille (36), lesquels module de mise en veille (36) et organe de contrôle (38) étant configurés pour autoriser l'alimentation électrique du convertisseur de tension (19) uniquement consécutivement à l'actionnement de l'organe de contrôle (38) pendant une durée déterminée ou si un courant est mesuré par le module de mesure et de signalisation de l'alimentation (35).

11. Installation selon l'une quelconque des revendications 1 à 10, **caractérisée en ce que** le deuxième circuit électrique (18) de la station d'alimentation électrique mobile (15) comprend en outre un module de communication sans fil (39) configuré pour transmettre des informations relatives à l'état de fonctionnement de ladite station d'alimentation électrique mobile (15) et/ou dudit au moins un appareil électrique (3).

12. Installation selon l'une quelconque des revendications 1 à 11, **caractérisée en ce que** le deuxième circuit électrique (18) de la station d'alimentation électrique mobile (15) comprend en outre un contrôleur de connectique (40) agencé pour contrôler le premier connecteur électrique d'alimentation (20) sous forme d'un bus universel série standard, ledit contrôleur de connectique (40) étant relié électriquement en aval du convertisseur de tension (19) et en amont dudit premier connecteur électrique d'alimentation (20).

13. Procédé d'utilisation de ladite installation électrique de distribution et de charge d'au moins une première batterie (1) et une deuxième batterie (2) et d'alimentation d'au moins un appareil électrique (3) selon l'une quelconque des revendications 1 à 12, ledit procédé comprenant au moins :
- une étape de raccordement du dispositif électrique de charge et de distribution (7) à la source d'énergie électrique extérieure (9) d'un bâtiment (41), lors de laquelle les moyens de raccordement électrique (8) du dispositif électrique de charge et de distribution (7) sont reliés électriquement à ladite source d'énergie électrique extérieure (9) du bâtiment (41),
- une étape de connexion desdites première et deuxième batteries (1, 2) au dispositif électrique de charge et de distribution (7), lors de laquelle lesdites première et deuxième batteries (1, 2) sont reçues respectivement dans la première zone de réception (12) et la deuxième zone de réception (13), et le premier connecteur électrique bidirectionnel (6) de la première batterie (1) et le deuxième connecteur électrique (14) de la première zone de réception (12) sont reliés électriquement pour charger en énergie électrique ladite première batterie (1) dans un état chargé, et le premier connecteur électrique bidirectionnel (6) de la deuxième batterie (2) et le deuxième connecteur électrique (14) de la deuxième zone de réception (13) sont reliés électriquement pour charger en énergie électrique ladite deuxième batterie (2) dans un état chargé,
- une étape de mise à disposition d'au moins une station d'alimentation électrique mobile (15) d'au moins un appareil électrique (3) dans ledit au moins un bâtiment (41), lors de laquelle ladite au moins une station d'alimentation électrique mobile (15) est mise à disposition,
- une étape de mise à disposition de ladite première batterie (1) en état chargé, lors de laquelle ladite première batterie (1) en état chargé est mise à disposition,
- une étape de connexion de ladite première batterie (1) à la station d'alimentation électrique mobile (15), lors de laquelle la première batterie (1) est reçue dans l'unique zone de réception (16) de la station d'alimentation électrique mobile (15) et le premier connecteur électrique bidirectionnel (6) de la première batterie (1) et le troisième connecteur électrique (17) de la station d'alimentation électrique mobile (15) sont relié électriquement,
- une étape de raccordement dudit au moins un appareil électrique (3) à la station d'alimentation électrique mobile (15), lors de laquelle le premier connecteur électrique d'alimentation (20) de la station d'alimentation électrique mobile (15) et le deuxième connecteur électrique d'alimentation (22) de l'appareil électrique (3) sont reliés électriquement et/ou le premier organe de transmission d'électricité sans fil (21) de la station d'alimentation électrique mobile (15) et le deuxième organe de transmission d'électricité sans fil (23) de l'appareil électrique (3) sont mis à portée l'un de l'autre, pour alimenter électriquement ledit au moins un appareil électrique (3),
- une étape de déconnexion de ladite première batterie (1) de la station d'alimentation électrique mobile (15), lors de laquelle la première batterie (1) est retirée de l'unique zone de réception (16) de la station d'alimentation électrique mobile (15) et le premier connecteur électrique bidirectionnel (6) de la première batterie (1) et le troisième connecteur électrique (17) de la station d'alimentation électrique mobile (15) sont déconnectés électriquement l'un de l'autre,
- une étape de reconnexion de ladite première batterie (1) au dispositif électrique de charge et de distribution (7), lors de laquelle ladite première batterie (1) en état déchargé est reçue dans la première zone de réception (12), et le premier connecteur électrique bidirectionnel (6) de la première batterie (1) et le deuxième connecteur électrique (14) de la première zone de réception (12) sont reliés électriquement pour recharger en énergie électrique ladite première batterie (1) dans un état chargé,
- une étape de mise à disposition de la deuxième batterie (2) en état chargé, lors de laquelle ladite deuxième batterie (2) en état chargé est mise à disposition.

14. Procédé selon les revendications 10 et 13, **caractérisé en ce qu'**il comprend en outre une étape de mise en marche de la station d'alimentation électrique mobile (15), lors de laquelle l'organe de contrôle (38) du module de mise en veille (36) est actionné pour autoriser l'alimentation électrique du convertisseur de tension (19).
